# EUROPEAN PATENT APPLICATION

(11) **EP 3 297 391 A1**
(43) Date of publication of application: **21.03.2018**
(21) Application number: 17193094.4
(22) Date of filing: 19.11.2014
(51) Int. Cl.: H04W 88/04, H04B 7/155

(54) **REQUESTING CONNECTION VIA A RELAY CAPABLE WIRELESS TERMINAL**

(30) Priority: 19.11.2013 US 201361906361 P; 18.11.2014 US 201414547036
(62) Divisional of application: 14815983.3
(71) Applicant: QUALCOMM Incorporated, San Diego, CA 92121-1714 (US)
(72) Inventor: TIMARIU, Luiza, San Diego,, CA California 92121-1714 (US); KRASNYANSKIY, Maksim, San Diego,, CA California 92121-1714 (US); CHERIAN, George, San Diego,, CA California 92121-1714 (US); ABRAHAM, Paul Santosh, San Diego,, CA California 92121-1714 (US); MERLIN, Simone, San Diego,, CA California 92121-1714 (US); JAFARIAN, Amin, San Diego,, CA California 92121-1714 (US)
(74) Representative: Schmidbauer, Andreas Konrad

(57) **Abstract**

A second apparatus for wireless communications and a corresponding method is disclosed.
The second apparatus generates a request for transmission in a wireless medium, the request comprising a request for a first relay capable apparatus to provide an interface to an access point, outputs the request for transmission over the wireless medium and accesses the access point through the interface if the request has been granted by the first apparatus.
The request specifies a wireless network operator, to enable the first apparatus to limit the interface for communication with an access point belonging to the wireless network operator.

## Description

### CROSS-REFERENCE TO RELATED APPLICATION(S)

This application claims the benefit of U.S. Provisional Application Serial No. 61/906,361, entitled "RELAY CAPABLE WIRELESS APPARATUSES" and filed on November 19, 2013, and U.S. Patent Application No. 14/547,036, entitled RELAY CAPABLE WIRELESS APPARATUSES and filed on November 18, 2014, which are expressly incorporated by reference herein in their entirety.

### BACKGROUND

### Field

The present disclosure relates generally to wireless communications, and more specifically to wireless apparatuses capable of providing relay functionality in wireless networks.

### Background

Advances in technology have resulted in smaller and more powerful computing devices. For example, there currently exist a variety of wireless computing devices, such as portable wireless telephones, personal digital assistants ("PDAs"), and paging devices that arc small, lightweight, and easily carried by users. These devices can communicate voice and data packets over wireless networks. Also, such devices may be able process executable instructions, including software applications, such as a web browser application, that can be used to access the Internet.

Wireless networks are widely deployed to provide various services to these devices, or client stations ("STAs"). Today, wireless networks enable broadband communications over broad geographic regions (e.g., metropolitan, regional, nationwide, or even global), as well as more localized and personalized regions. Wireless networks covering local regions have become increasing pervasive in recent years. These wireless networks are often referred to as Wireless Local Area Networks ("WLANs") which have been standardized, by way of example, by the Institute of Electrical Engineers ("IEEE") 802.11 committee. WLANs arc deployed to cover small areas with a geographic coverage ranging from a few tens of meters to a few hundred meters. By way of example, many homes, office buildings, campuses, hotels, transportation hubs (e.g., airports, train stations, etc.) and other facilities contain access points ("APs") that provide STAs with access to the Internet.

One or more relays may be used to extend the coverage of the WLAN. These relays facilitate long distance communications between the AP and STA by relaying packets between them. By way of example, a relay may provide a wireless backhaul link to an AP for a STA that would otherwise be out of the coverage range of the AP. These relays may be stand alone devices, or in some instances, integrated into STAs. A relay capable STA provides relay functionality to other STAs in the region.

STAs are battery powered devices, and therefore, have certain power limitations. To save power, IEEE 802.11 compliant STAs are configured to enter into an idle mode when they arc not transmitting or receiving data. However, relay capable STAs do not have similar power saving features when it comes to their relay functions, In these devices, the relay function remains enabled even when not in use, thereby consuming unnecessary power.

### SUMMARY

One aspect disclosed is directed to an apparatus for wireless communications. The apparatus includes a processing system configured to associate with a first remote apparatus, monitor a wireless medium for a request from a second remote apparatus, and determine whether to enable an interface between the first and second remote apparatuses in response to the request.

Another aspect disclosed is directed to apparatus for wireless communications. The apparatus includes means for associating with a first remote apparatus, means for monitoring a wireless medium for a request from a second remote apparatus, and means for determining whether to enable an interface between the first and second remote apparatuses in response to the request.

A further aspect disclosed is directed to a method of wireless communications. The method includes associating with a first remote apparatus, monitoring a wireless medium for a request from a second remote apparatus, and determining whether to enable an interface between the first and second remote apparatuses in response to the request.

Another aspect disclosed is directed to a computer program product for wireless communications. The computer program product including a machine-readable medium having instructions executable to associate with a first remote apparatus, monitor a wireless medium for a request from a second remote apparatus, and determine whether to enable an interface between the first and second remote apparatuses in response to the request.

A further aspect disclosed is directed to a station. The station includes a processing system configured to associate with a first remote apparatus, monitor a wireless medium for a request from a second remote apparatus, and determine whether to enable an interface between the first and second remote apparatuses in response to the request. The station also includes a user interface configured to provide user control of the processing system.

Another aspect disclosed is directed to an apparatus for wireless communications. The apparatus includes a processing system configured to generate a request for transmission in a wireless medium, the request comprising a request for a first remote apparatus to provide an interface to a second remote apparatus, and access the second remote apparatus through the interface.

A further aspect disclosed is directed to an apparatus for wireless communications. The apparatus includes means for generating a request for transmission in a wireless medium, the request comprising a request for a first remote apparatus to provide an interface to a second remote apparatus, and means for accessing the second remote apparatus through the interface.

Another aspect disclosed is directed to a method for wireless communications. The method includes generating a request for transmission in a wireless medium, the request comprising a request for a first remote apparatus to provide an interface to a second remote apparatus, and accessing the second remote apparatus through the interface.

A further aspect disclosed is directed to a computer program product for wireless communications. The computer program product includes a machine-readable medium having instructions executable to generate a request for transmission in a wireless medium, the request comprising a request for a first remote apparatus to provide an interface to a second remote apparatus, and access the second remote apparatus through the interface.

Another aspect disclosed is directed to a station. The station includes a processing system configured to generate a request for transmission in a wireless medium, the request comprising a request for a first remote apparatus to provide an interface to a second remote apparatus, and access the second remote apparatus through the interface. The station also includes a user interface configured to provide user control of the processing system.

It will be understood that other aspects of methods and apparatuses will become readily apparent to those skilled in the art from the following disclosure, wherein it is shown and described only several aspects of the methods and apparatuses by way of illustration. As will be realized by those skilled in the art, the methods and apparatuses are capable of other and different aspects and its several details are capable of modification in various other respects, all without departing from the spirit and scope of this disclosure. Accordingly, the drawings and detailed description are to be regarded as illustrative in nature and not as restrictive.

### BRIEF DESCRIPTION OF THE DRAWINGS

Various aspects of methods and apparatuses will now be presented in the detailed description by way of example, and not by way of limitation, with reference to the accompanying drawings, wherein:
FIG. 1 is a conceptual diagram illustrating an exemplary aspect of a WLAN in which various aspects of the methods and apparatuses described herein may be employed.
FIG. 2 is a conceptual diagram illustrating the exemplary aspect of the WLAN shown in FIG. 1 with the addition of a third STA located outside the AP's coverage region.
FIG. 3 is a conceptual diagram illustrating the exemplary aspect of the WLAN shown in FIG. 1 with the addition of a third STA in the power up mode located outside the AP's coverage region.
FIG. 4 is a conceptual diagram illustrating the exemplary aspect of the WLAN shown in FIG. 1 with a third STA moving through the WLAN.
FIG. 5 is a conceptual diagram illustrating another exemplary aspect of the WLAN shown in FIG. 1 with the addition of a third STA located outside the AP's coverage region.
FIG. 6 is a schematic diagram illustrating an exemplary aspect of a STA.
FIG. 7 is a functional block diagram illustrating the functionality of the exemplary aspect of the STA shown in FIG. 6.
FIG. 8 is a schematic diagram illustrating an exemplary aspect of a relay capable STA.
FIG. 9A is a functional block diagram illustrating the functionality of an exemplary aspect of the STA shown in FIG. 8.
FIG. 9B is a functional block diagram illustrating the functionality of another exemplary aspect of the STA shown in FIG. 8.
FIG. 10A is a flow chart illustrating the functionality of an exemplary aspect of the STA shown in FIG. 8.
FIG. 10B is a flow chart illustrating the functionality of another exemplary aspect of the STA shown in FIG. 8.

In accordance with common practice, some of the drawings may be simplified for clarity. Thus, well-known structures and components may be shown in block diagram form, or omitted entirely, in order to avoid obscuring the various concepts presented throughout this disclosure.

### DETAILED DESCRIPTION

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings arc merely illustrative of the disclosure rather than limiting, the scope of the disclosure being defined by the appended claims and equivalents thereof.

The term "apparatus" shall be construed broadly to mean any wireless node, or any block, module, component, circuit, part, or the like, or any combination thereof used in a wireless node. The term "method" shall similarly be construed broadly to mean the operation of a wireless node, or any step, process, algorithm, or the like, or any combination thereof performed by a wireless node. The term "wireless node" shall be construed broadly to mean any AP, AT, relay, relay capable AP, relay capable AT, or any other suitable device wireless modem or communications device.

The term "associate," or "association," or any variant thereof should be given the broadest meaning possible within the context of the present disclosure. By way of example, when a first apparatus associates with a second apparatus, it should be understood that the two apparatus may be directly associated or intermediate apparatuses may be present. For purposes of brevity, the process for establishing an association between two apparatuses will be described using a handshake protocol that requires an "association request" by one of the apparatus followed by an "association response" by the other apparatus. It will be understood by those skilled in the art the handshake protocol may require other signaling, such as by way of example, signaling to provide authentication.

The term "exemplary" is used herein to mean serving as an example, instance, or illustration. Any aspect described herein as "exemplary" is not necessarily to be construed as preferred or advantageous over other aspects. Likewise, the term "aspect" of an apparatus or method does not require that all aspects of the invention include the described components, structure, features, functionality, processes, advantages, benefits, or modes of operation.

Any reference to an element herein using a designation such as "first," "second," and so forth does not generally limit the quantity or order of those elements. Rather, these designations are used herein as a convenient method of distinguishing between two or more elements or instances of an element. Thus, a reference to first and second elements does not mean that only two elements can be employed, or that the first element must precede the second element. In addition, terminology referring to "at least one of" a list of items refers to any combination of those items, including single members. As an example, "at least one of: A, B, or C" is intended to cover: A, or B, or C, or A and B, or A and C, or B and C, or A, B and C, or 2A, or 2B, or 2C, and so on.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of the stated features, integers, steps, operations, elements, and/or components, but do not preclude the presence or addition of one or more other features, integers, steps, operations, elements, components, and/or groups thereof.

Several aspects of methods and apparatuses will be presented in the context of a WLAN. A WLAN may be used to provide wireless connectivity and efficient data transfer employing widely used networking protocols. The various aspects described herein may apply to Wi-Fi or, more generally, any member of the IEEE 802.11 family of wireless protocols. By way of example, the various aspects described herein may be used to support the IEEE 802.11 ah protocol. The IEEE 802. 11ah protocol is a network protocol operating in the sub-1-GHz frequency range (e.g., operating in the 902-928 MHz range in the United States), which provides greater wireless range than other IEEE 802.11 protocols. However, as those skilled in the art will readily appreciate, such aspects may be extended to other wireless networks, such as wireless wide area networks ("WWANs"), wireless personal area networks ("WPANs"), or any other suitable wireless network regardless of its geographic reach or network protocol. According any reference to an IEEE 802.11 network is intended only to illustrate various aspects of methods and apparatuses, with the understanding that such aspects may have a wide range of applications.

A WLAN is generally comprised of multiple wireless nodes. By way of example, the WLAN may be implemented with multiple fixed-site APs dispersed throughout a geographic region, although one or more of the APs could be mobile. The APs may be used to support several fixed-site and/or mobile STAs present within the coverage region of the APs. In general, an AP may serve as a hub or base station for the WLAN that provides backhaul services to STAs in the coverage region. Examples of STAs include cellular telephones, cordless telephones, session initiation protocol ("SIP") phones, wireless local loop ("WLL") stations, personal digital assistants ("PDAs"), handheld devices having wireless connection capability, or some other suitable processing device connected to a wireless modem. Accordingly, various aspect presented herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

A STA may be referred to as a subscriber station, a subscriber unit, a mobile station (MS), a remote station, a remote terminal, a user terminal (UT), a user agent, a user device, user equipment (UE), a user station, or some other terminology. Likewise, an AP may be referred to as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology. The various concepts described throughout this disclosure are intended to apply to all suitable wireless nodes regardless of their specific nomenclature.

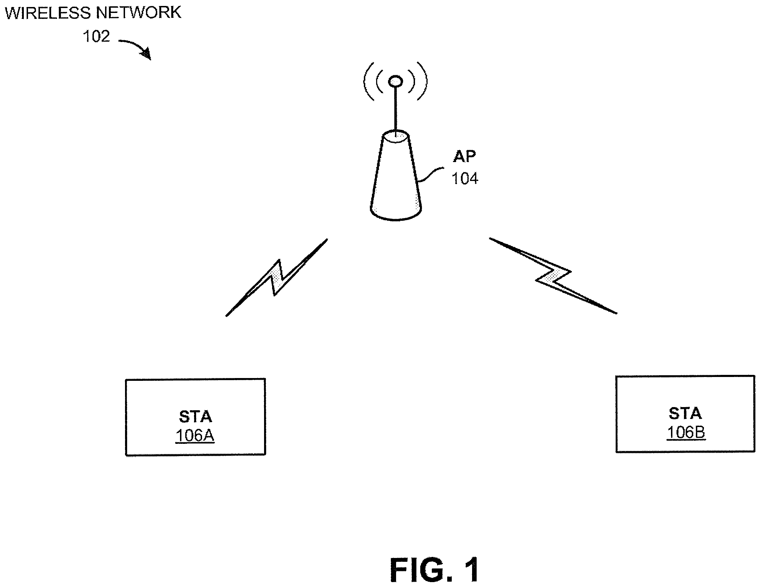

FIG. 1 is a conceptual diagram illustrating an exemplary WLAN in which various aspects of the methods and apparatuses described herein may be employed. The WLAN 102 may operate pursuant to a wireless standard, for example the IEEE 802.11 standard. The WLAN 102 may include any number of APs dispersed throughout the coverage region, A single AP 104 is shown in FIG. 1 for simplicity of explanation. The AP 104 provides an access point to a remote network, such as the Internet or a public switched network ("PSTN"), for the STAs operating in its coverage region. FIG. 1 shows first STA 106A and second STA 106B in communication with the AP 104, but different numbers of STAs may be supported at different times due to the mobility of the STAs.

The wireless nodes operating in the WLAN 102 may use any suitable multiple access technology to gain access to the wireless medium depending on the particular wireless standard being supported. Examples of multiple access technologies include Code Division Multiple Access (CDMA), Time Division Multiple Access (TDMA), Frequency Division Multiple Access (FDMA), Spatial Division Multiple Access (SDMA), Orthogonal Frequency Division Multiple Access (OFDMA), Single-Carrier Frequency Division Multiple Access (SC-FDMA) systems, Carrier Sense Multiple Access (CSMA), or any combination thereof, or any other suitable wireless technology that enable multiple wireless nodes to share a wireless medium.

The AP 104 may periodically broadcast a beacon signal (or simply a "beacon"), to announce its presence and relay information, such as the beacon interval, timestamp, service set identifier (SSID), and other AP parameters to the STAs (e.g., first STA 106A and second STA 106B) within the AP's coverage region. Each STA 106 performs either a passive scan or an active scan. In the case of a passive scan, the STA 106 scans all radio channels for the beacon from the AP 104. Once the beacon is detected, the STA 106 may then decide whether to connect to the AP 104. In the case of an active scan, the STA 106 attempts to locate the AP 104 by broadcasting a probe request. The AP 104 sends back a probe response. The probe response is similar to the beacon. Based on the probe response, the STA 106 may decide whether to connect to the AP 104. Once the STA 106 decides to connect to the AP 104, regardless of the particular type of scan utilized, the STA 106 transmits an association request, which enables the AP 104 to allocate resources for STA 106. The association request may include various information about the STA 106, including by way of example, the data rates supported by the STA and the SSID. In response to the association request, the AP 104 determines whether to grant the request, and if so, reserves resources for the STA 106 and establishes an association ID. The AP 104 then sends an association response to the STA 106 indicating whether the request has been granted. If granted, the association response includes various information, including by way of example, the association ID and the supported data rates. Once associated, the STA 106 may use the AP 104 to access a remote network, such as the Internet or a PSTN.

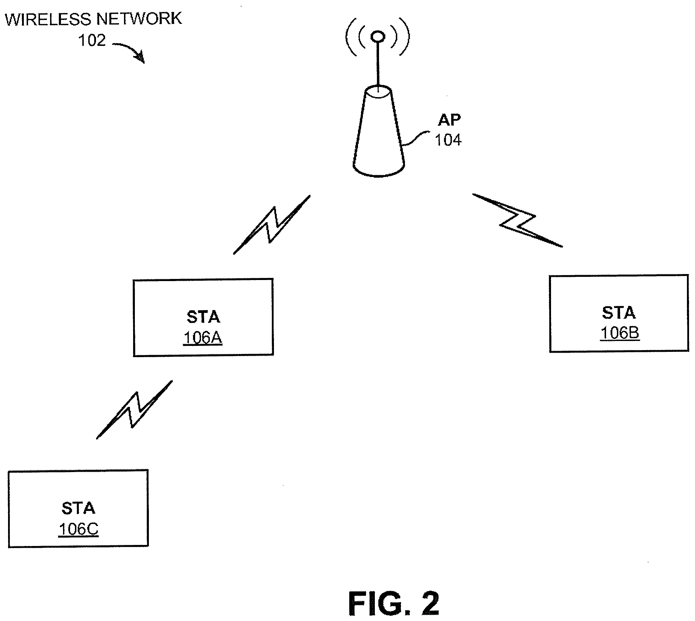

FIG. 2 is a conceptual diagram illustrating the exemplary WLAN shown in FIG. 1 with the addition of a third STA located outside the AP's coverage region. As described above, the first STA 106A and the second STA 106B are located within the AP's coverage region. The first STA 106A is a relay capable STA with its own coverage region. In this example, a third STA 106C is introduced located outside the AP's coverage region, but within the first STA's coverage region. Thus, the first STA 106A may be used to relay data packets between the third STA 106C and the AP 104. Specifically, the first STA 106A provides a wireless backhaul to the third STA 106C as long as the third STA 106C remains in the first STA's coverage region.

Although not shown, the first STA 106A may support multiple STAs located within its coverage region. In addition, the second STA 106B may also be relay capable with its own coverage region that can also provide a wireless backhaul to the AP 104 for other STAs. The WLAN 102 may be further extended if the third STA 106C, or another STA in the first STA's coverage range, is relay capable. In that case, both the first STA 106A and the third STA 106C may work together to relay data packets between the AP 104 to a STA (not shown) within the third STA's coverage region. As those skilled in the art will readily appreciate, numerous multiple hop scenarios may be created in an ad-hoc manner as STAs and relay capable STAs enter and leave the WLAN 102.

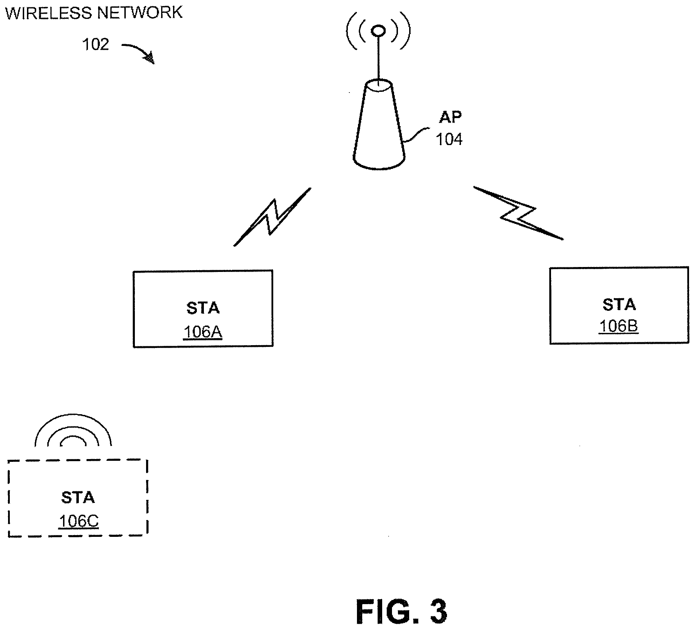

FIG. 3 is a conceptual diagram illustrating the exemplary WLAN shown in FIG. 1 with the addition of a third STA in the power up mode located outside the AP's coverage region. In this example, the relay function of the first STA 106A is in the idle mode. During this mode, the first STA 106A monitors the wireless medium for a relay request from another STA for an interface to the AP 104. In one exemplary aspect, the relay request may be a "probe request." As described above, the probe request may be an existing IEEE 802.11 signal that is used to actively scan for APs. Thus, the probe request is an attractive approach because it may be used to scan for both APs and relay capable STAs. However, the use of the probe request may have drawbacks. For example, many probe requests may propagate through the wireless medium at any one time, and may therefore impact performance. In another example, the relay function of a STA may unnecessarily initiate the relay function in response to a probe request when a nearby AP is available. An alternative approach for initiating a connection with a relay capable STA is to use a "dedicated request." The STA may use filtering techniques to recognize only the dedicated request, thereby minimizing the risk that the STA will unnecessarily initiate the relay function. A drawback to the dedicated request, however, is that additional signaling may be required to facilitate to facilitate use of the dedicated request. Those skilled in the art will be best equipped to evaluate the various tradeoffs when implementing a signaling scheme based on the particular application and the overall design parameters imposed on the overall system.

Various aspects may use different timing schemes for the relay request. Referring to FIG. 3, the third STA 106C may aggressively search for a relay capable STA by repeatedly transmitting a relay request asynchronously. Alternatively, the third STA 106C may search for a relay capable STA by transmitting a relay request in accordance with some timing reference known by all wireless nodes in the WLAN 102. The reference may be an internal clock maintained by the AP 104 that is inherent in the timestamp information transmitted in the beacon by the AP 104. The first STA 106A may transmit a beacon to make available the timestamp information to the third STA 106C. Alternatively, the wireless nodes can obtain the timing reference information from a remote time source. The remote time source may be one of numerous servers in a remote network that are synchronized to Universal Time Coordinated (UTC) via radio, satellite, modem, or other means. Those skilled in the art will readily be able to determine which of the two timing schemes should be used, either alone or in combination with one another and/or other timing schemes, depending on the particular application and the overall design constraints imposed on the system.

The relay request transmitted by the third STA 106C, whether a probe request, a dedicated request, or other type of request, may include various information regarding the nature of services requested. By way of example, the relay request may be restricted to an interface to a specific AP, or one of several APs provided on an AP list contained in the request. As another example, the relay request may be restricted to APs belonging to a particular wireless network operator. In the case where a probe request is used as the relay request, information may be included indicating whether or not the third STA 106C requires a direct connection to an AP or is able to handle an interface from a relay capable STA to the AP. As those skilled in the art will readily appreciate, the relay request and the information contained in the relay request may vary depending on the particular application and the overall design constraints imposed on the overall system.

The first STA 106A may use the relay request to determine whether to provide backhaul services to the third STA 106C based on various metrics. These metrics may be related to the capability of the first STA 106A to provide a suitable relay function. By way of example, the first STA 106A may deny services to the third STA 106C if its battery level is too low, or its current resource usage is too high, or the signal strength of the relay request is too weak, or the signal strength to the AP 104 is too weak. As used herein, the term "resource usage" encompasses a wide variety of meanings. For example, "resource usage" may include but is not limited to energy resource usage, time resource usage, frequency resource usage, or any combination thereof. Alternatively, or in addition to, user settings on the first STA 106A may be used to determine whether to provide services to the third STA 106C. By way of example, the user may set the first STA 106A so that it cannot serve as a relay for other STAs. Various other metrics may be used, either alone or in combination with one or more of the metrics discussed above. Those skilled in the art will be readily able to determine the appropriate metrics based on the particular application and the overall design constraints imposed on the system.

The first STA 106A sends back to the third STA 106C a response to the relay request. The response indicates whether the first STA 106A can provide the requested services. If the response indicates that the first STA 106A can provide those services, information such as time stamp information, SSID, and other parameters regarding the first STA 106A may be included in the response. The third STA 106C then transmits an association request, which enables the first STA 106A to allocate resources for the third STA 106C. The association request may include various information about the third STA 106C, including by way of example, the data rates supported by the first STA 106A and the SSID of the WLAN 102. In response to the association request, the first STA 106A reserves resources for the third STA 106C and establishes an association ID. The first STA 106A then sends an association response to the third STA 106C. The association response includes various information, including by way of example, the association ID and the supported data rates. Once associated, the third STA 106C may use the first STA 106A to communicate with the AP 104, and thereby access a remote network, such as the Internet or a PSTN.

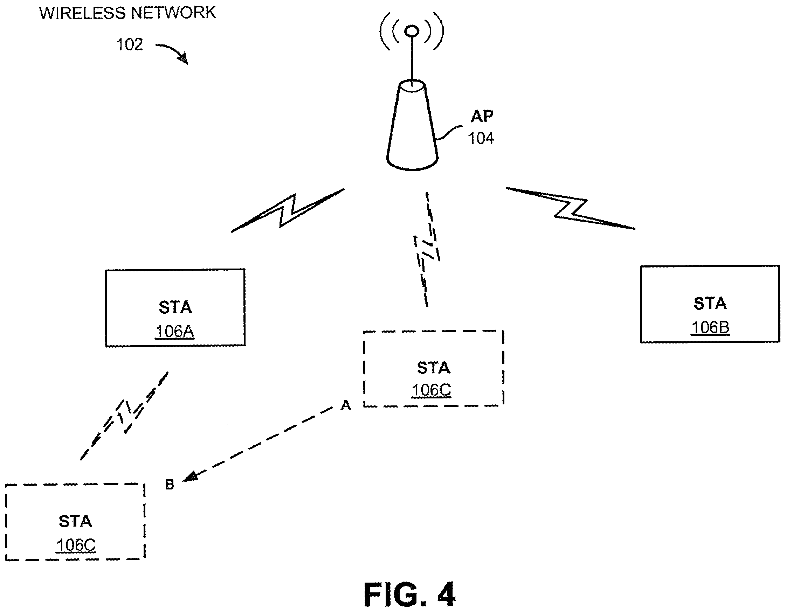

FIG. 4 is a conceptual diagram illustrating the exemplary WLAN shown in FIG. 1 with a third STA moving through the WLAN. In this example, the third STA 106C is shown moving from a position within the AP's coverage region to a position beyond the AP's coverage region by a series of broken lines. Initially, at position A, the third STA 106C is able to access a remote network, such as the Internet or a PSTN, directly through the AP 104. As the third STA 106C begins to move away from location A, it continues to monitor the signal strength of the downlink transmissions from the AP 104. As the third STA 106C begins to approach the edge of the AP's coverage region, the signal strength of the downlink transmissions from the AP 104 become weak. At this point, the third STA 106C transmits a relay request to locate a relay capable STA that can support a handoff from the AP 104. The relay request may contain information that requires an interface to the same AP 104 to maintain the network connection. The first STA 106A, which has a connection to the AP 104, detects the relay request. In response to the request, the first STA 106A determines whether the appropriate metrics are satisfied, and if so, places the relay function into an active state. The first STA 106A sends back a response to the third STA 106C indicating that it can provide the requested interface. The third STA 106C transmits an association request to the first STA 106A, which enables the first STA 106A to allocate resources for the third STA 106C. In response to the association request, the first STA 106A reserves resources for the third STA 106C and establishes an association ID. The first STA 106A then sends an association response back to the third STA 106C. The association response includes various information that enable the third STA 106C to associate with the first STA 106A. Once the two are associated, the third STA 106C sends a disassociation request to the AP 104, which is followed by a disassociation response from the AP 104 to the third STA 106C, thereby allowing the AP 104 and the third STA 106C to disassociate from one another. This approach provides a make-before-break handoff to provide a seamless transition as the third STA 106C continues to move towards position B. Alternatively, a break-before-make handoff may be implemented where the third STA 106C disassociates with the AP 104 before associating with the first STA 106A.

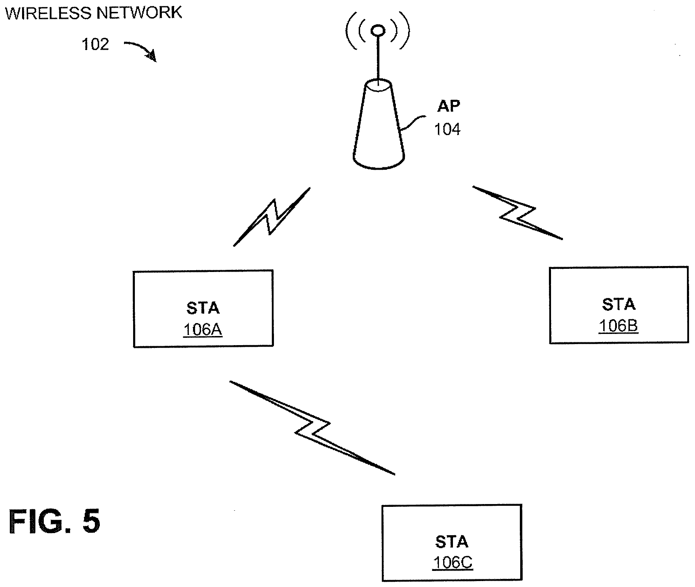

FIG. 5 is a conceptual diagram illustrating the exemplary WLAN shown in FIG. 1 with the addition of a third STA located outside the AP's coverage region. In this example, the third STA 106C is in both the first and second STA's coverage region. Initially, upon powering up for example, the third STA 106C transmits a relay request. If both the first STA 106A and the second STA 106B can provide an interface to the AP 104, both the first STA 106A and the second STA 106B send a response back to the third STA 106C and wait for an association request. Based on these responses, the third STA 106C chooses one of the STAs to associate with. The decision may be based on any suitable criteria, such as signal strength of the response or other information relating to the capability of one STA to provide service compared to the other. By way of example, one of the STAs may have more resources available than the other. In any event, the third STA 106C selects one of the STAs to associate with, which in this example is the first STA 106A. The third STA 106C then associates with the first STA 106A. To conserve power, the second STA 106B may be configured to place its relay function back to the idle mode if an association request is not received within a given period of time.

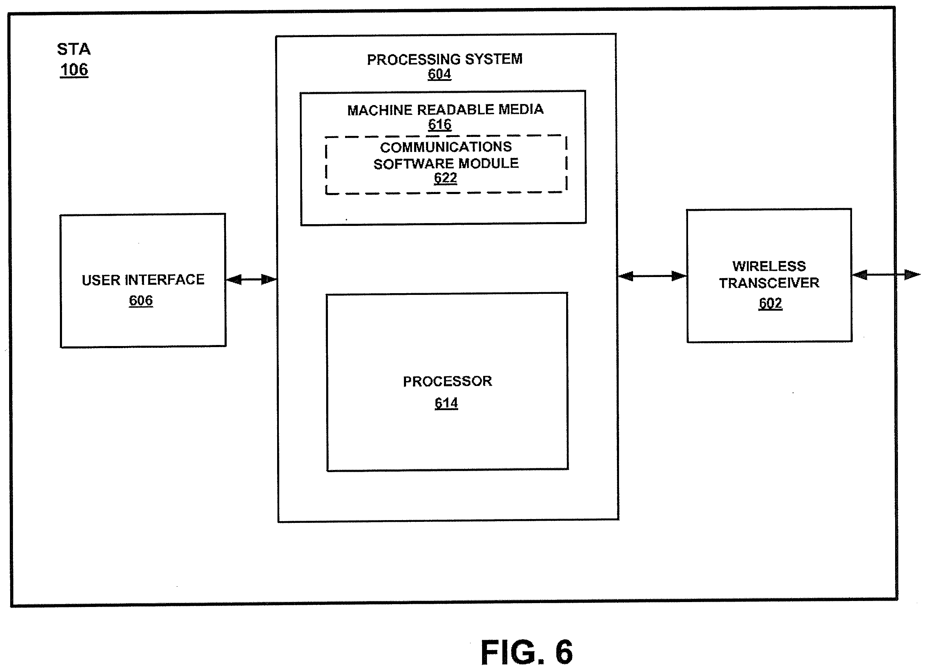

FIG. 6 is a schematic diagram illustrating an exemplary STA. In this example, the STA 106 is represented by three schematic blocks: a wireless transceiver 602, a processing system 604, and a user interface 606.

The wireless transceiver 602 may be configured to provide both transmit and receive functions. The transmit function includes modulating a carrier with data and the receive function includes demodulating a carrier to recover data. The wireless transceiver 602 may also provide various other functions, such as RF processing, analog/digital conversion, data packet detection, timing and synchronization, channel estimation, spatial processing, OFDM processing, signal constellation mapping, turbo coding, etc. In summary, the wireless transceiver 602 may be configured to provide a complete physical layer implementation of the STA 106.

The processing system 604, either alone or in combination with other entities in the STA 106, may be configured to implement all functionality above the physical layer. Alternatively, the processing system 604 may also implement all or part of the physical layer. In the most general terms, the processing system 604 is configured to utilize the transmit and receive functions to support communications with an AP.

The user interface 606 enables the user to operate the STA 106. The user interface 606 may include a display, keypad, speaker, microphone, and/or any other suitable interface. The user interface 606 is used to control the data that is transmitted and received by the processing system 604 over a wireless medium by the wireless transceiver 602.

The processing system 604 may be implemented with a bus architecture, The bus (not shown) may include any number of interconnecting buses and bridges that link together various circuits including a processor 614 and machine-readable media 616. The bus may also link various other circuits (not shown) such as timing sources, peripherals, voltage regulators, power management circuits, and the like, which are well known in the art, and therefore, will not be described any further.

The processor 614 is responsible for managing the bus and general processing, including the execution of software stored on the machine-readable media 616. The processor 614 may be implemented with one or more general-purpose and/or special-purpose processors. Examples include microprocessors, microcontrollers, DSP processors, and other circuitry that can execute software. Alternatively, or in addition to the one or more general-purpose and/or special-purpose processors, the processor 614 may be implemented with dedicated hardware such as, by way of example, one or more FPGAs (Field Programmable Gate Array), PLDs (Programmable Logic Device), controllers, state machines, gated logic, discrete hardware components, or any other suitable circuitry, or any combination of circuits.

Software shall be construed broadly to mean instructions, data, or any combination thereof, whether referred to as software, firmware, middleware, microcode, hardware description language, or otherwise. The software may be stored or transmitted over as one or more instructions or code on a machine-readable medium. Machine-readable media include both computer storage media and communication media including any medium that facilitates transfer of a computer program from one place to another. A storage medium may be any available medium that can be accessed by a processor. By way of example, and not limitation, such machine-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a processor. Also, any connection is properly termed a machine-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects machine-readable media may comprise non-transitory machine-readable media (e.g., tangible media). In addition, for other aspects machine-readable media may comprise transitory machine-readable media (e.g., a signal). Combinations of the above should also be included within the scope of machine-readable media.

The machine-readable media 616 may be used to store a number of software modules. The software modules include instructions that when executed by the processor 614 cause the processing system 604 to become a special purpose processing system that performs various functions presented throughout this disclosure. Each software module may reside in a single storage device or distributed across multiple memory devices. By way of example, a software module may be loaded into RAM from a hard drive when a triggering event occurs. During execution of the software module, the processor 614 may load some of the instructions into cache to increase access speed. One or more cache lines may then be loaded into a general register file for execution by the processor 614. When referring to any software module in this disclosure, it will be understood that such reference is to the processor 614 executing instructions from that software module.

The machine-readable media 616 is shown with a communications software module 622. The communications software module 622 may be executed by the processor 614 to implement the protocol stack above the physical layer to support a connection to a remote network through an AP. By way of example, the communications software module 622 may implement the data link layer to manage access to the wireless medium, the network layer to manage source to destination data transfer, the transport layer to manage transparent transfer of data between end users, and any other layers necessary or desirable for establishing or supporting a connection through an AP to a remote network. As described earlier, the wireless transceiver 602 may be configured to implement the physical layer, although in other exemplary aspects, the communications software module 622 may be configured to implement the digital portion of the physical layer.

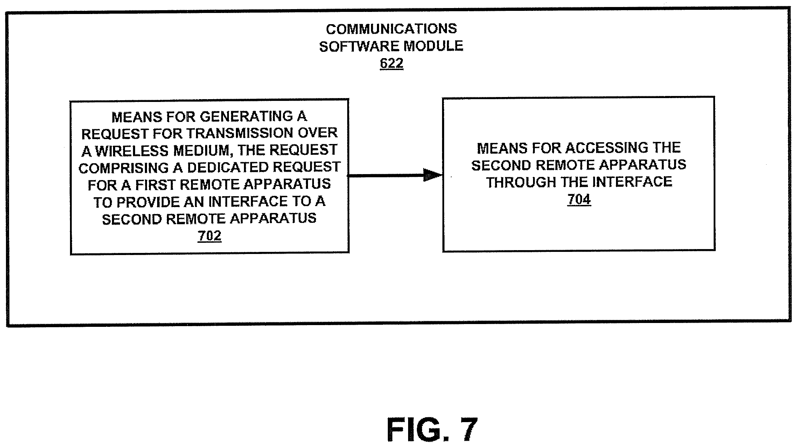

In an exemplary aspect of the processing system 604, the communications software module 622 may be executed by the processor 614 to support a connection to a relay capable apparatus which can provide an interface to another apparatus with a backhaul connection to a remote network. Referring to FIG. 7, in this exemplary aspect, the communications software module 622 may be executed by the processor 614 to provide a means 702 for generating a request for transmission over the wireless medium, wherein the request comprises a request for a first remote apparatus to provide an interface to a second remote apparatus, and a means 704 for accessing the second remote apparatus through the interface. The first remote apparatus may be a relay capable STA or some other suitable device. The second remote apparatus may be an AP, or an apparatus associated with the AP, or some other suitable device.

The means for generating the request may be implemented by any one of several algorithms resulting from the processor 614 executing the communications software module 622. In an exemplary aspect, the communications software module 622 monitors various parameters to determine when to generate the request. By way of example, the communications software module 622 may generate the request following an unsuccessful scan for an AP, or alternatively, when a handoff is needed. Once the communications software module 622 determines that a request is required, the communications software module 622 generates the information for the request. Different information may be provided in the request depending on the particular wireless standard employed by the WLAN. By way of example, the information may include a list of one or more apparatuses for the interface to provide a connection to. The list may be based on a previous or current association with the one or more apparatuses. The information may include, in addition or alternatively, a wireless network operator for the purpose of limiting association to only those apparatuses or relay capable apparatuses belonging to that network. In any event, once the information is generated, the communications software module 622 frames the information into a relay request in accordance with the appropriate protocol for the particular wireless standard being implemented before providing it to the wireless transceiver 602 (see FIG. 6) for transmission over the wireless medium.

The means for accessing the second remote apparatus through the interface of a first remote apparatus may also be implemented by any one of several algorithms resulting from the processor 614 executing the communications software module 622. In an exemplary aspect, the communications software module 622 places the wireless transceiver 602 into "a receive only" mode. The communications software module 622 then monitors the output from the wireless transceiver 602 for a response to the relay request. Upon detecting a response, the communications software module 622 generates an association request. Following the transmission of the association request, the communications software module 622 places the wireless transceiver 602 back into the receive only mode and monitors its output for an association response. Upon detecting a response, the communications software module 622 extracts the information from the response and uses that information to exchange data packets with the second remote apparatus through the interface of the first apparatus.

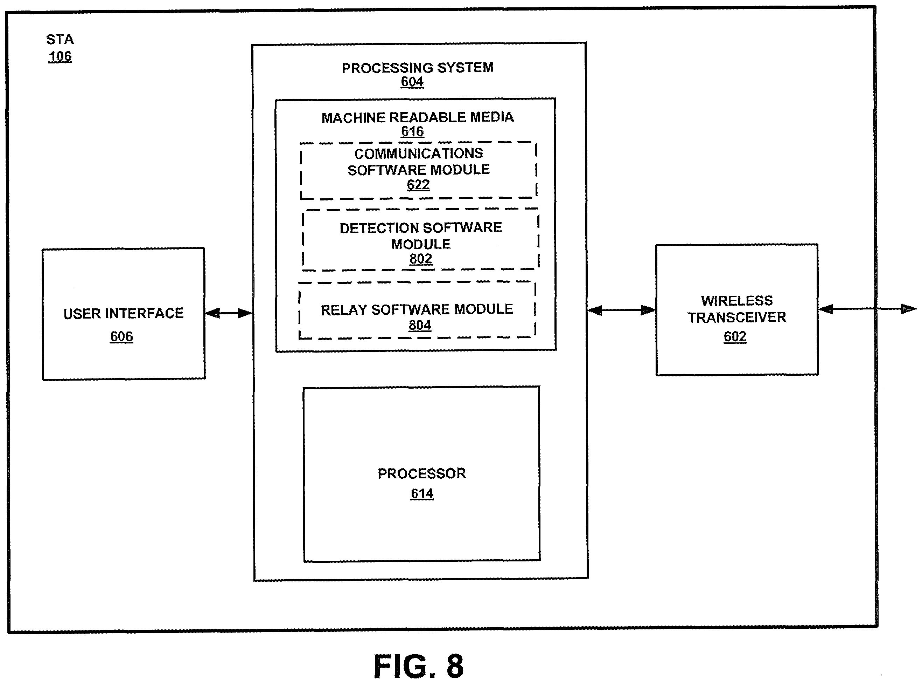

FIG. 8 is a schematic diagram illustrating an exemplary relay capable STA. The relay capable STA 106 has the same hardware configuration as the STA described above in connection with FIG. 6, except that it has two additional software modules to implement the interface: a detection software module 802 and a relay software module 804. As will be described in greater detail below, the detection software module 802 may be executed by the processor 614 to search the wireless medium for a request for an interface to an AP. During the search process, the relay software module 804 remains dormant to save power. The relay software module 804, which provides the relay functionality of the STA, is only loaded into the processor 614 and executed after a relay request is detected and a decision is made to associate with the requester.

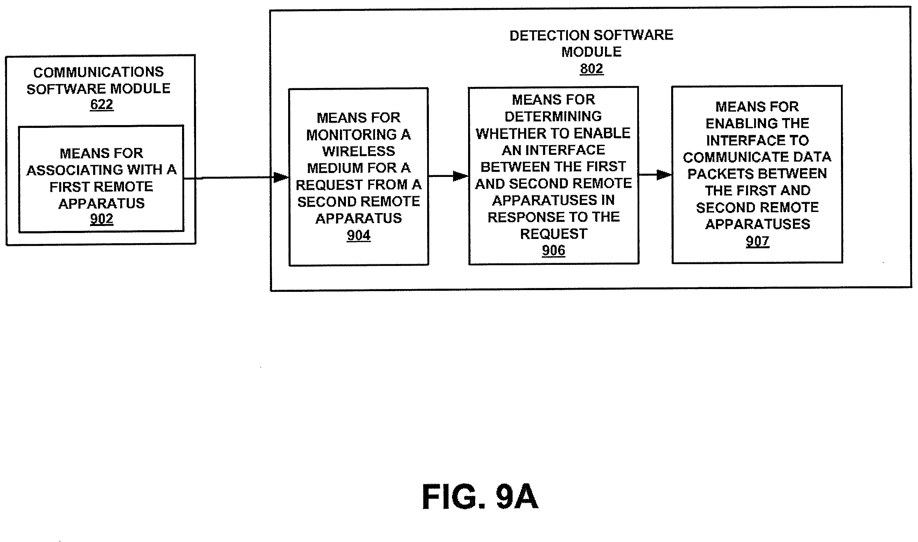

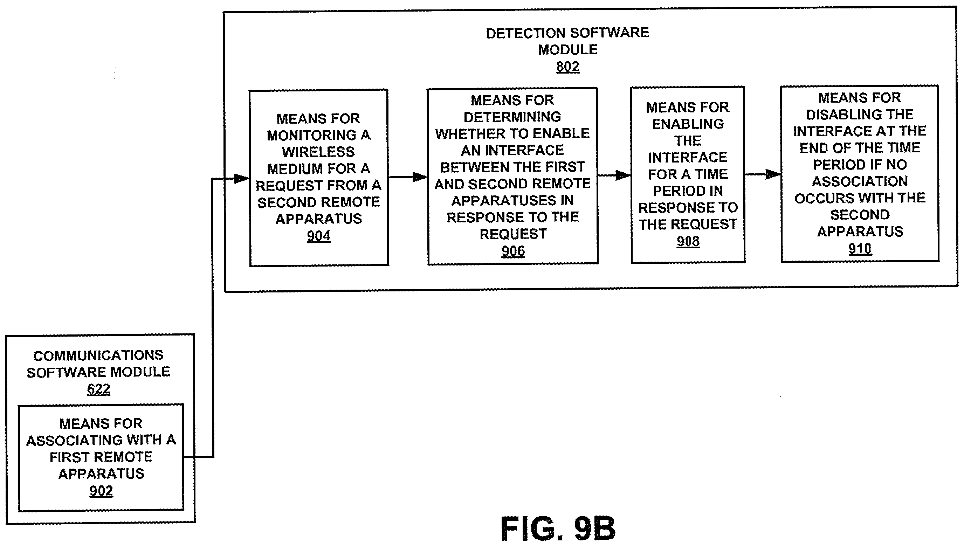

Referring to FIG. 9A, the communications software module 622 may be executed by the processor 614 to provide a means 902 for associating with a first remote apparatus. The detection software module 802 may be executed by the processor 614 to provide a means 904 for monitoring a wireless medium for a request from a second remote apparatus, a means 906 for determining whether to enable an interface between the first and second remote apparatuses in response to the request, and a means 907 for enabling the interface to communicate data packets between the first and second remote apparatuses. In at least one aspect, referring to FIG. 9B, the detection software module 802 may be executed by the processor 614 to provide a means 908 for enabling the interface for a time period in response to the request, and a means 910 for disabling the interface at the end of the time period if no association occurs with the second remote apparatus. The first remote apparatus may be an AP, or an apparatus associated with an AP, or some other suitable device. The second apparatus may be a STA, or some other suitable device, beyond the coverage region of the AP.

The means for associating with a first remote apparatus may also be implemented by any one of several algorithms resulting from the processor 614 executing the communications software module 622. In an exemplary aspect, the communications software module 622 may perform either a passive or active scan, In the case of a passive scan, the communications software module 622 prompts the wireless transceiver 602 to scan all radio channels for the beacon from a remote apparatus. In the case of an active scan, the communications software module 622 attempts to locate an apparatus by transmitting a probe request through the wireless transceiver 602 and then placing the wireless transceiver 602 into a "receive only" mode. The communications software module 622 then monitors the output from the wireless transceiver 602 for a probe response. Once the communications software module 622 detects a beacon in the case of a passive scan, or a probe response in the case of an active scan, the communications software module 622 generates an association request. Following the transmission of the association request, the communications software module 622 places the wireless transceiver 602 back into the receive only mode and monitors its output for an association response. Upon detecting a response, the communications software module 622 extracts the information from the response and uses that information to exchange data packets with the first remote apparatus.

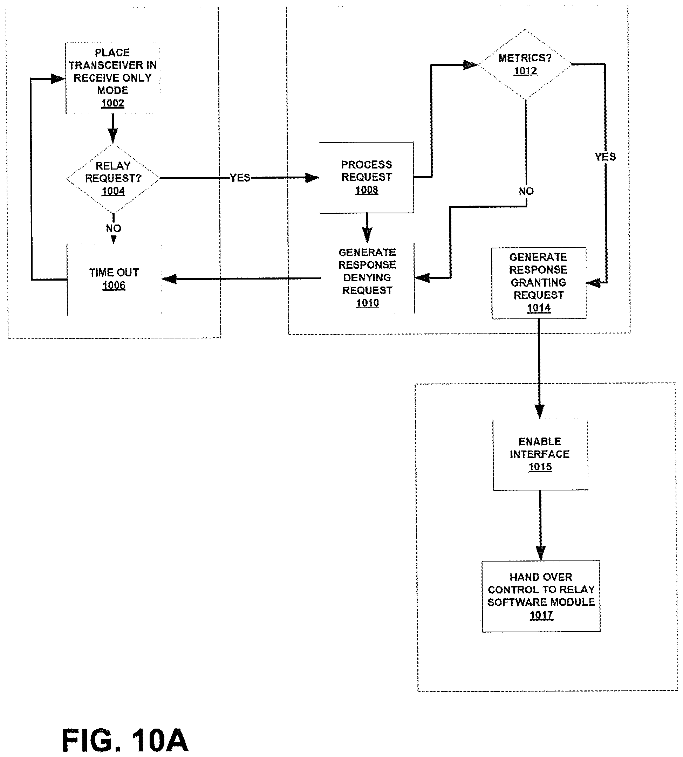

As described above, the detection software module 802 may be executed by the processor 614 to provide a means 904 for monitoring a wireless medium for a request from a second remote apparatus, a means 906 for determining whether to enable an interface between the first and second remote apparatuses in response to the request, a means 907 for enabling the interface to communicate data packets between the first and second remote apparatuses, a means 908 for enabling the interface for a time period in response to the request, and a means 910 for disabling the interface at the end of the time period if no association occurs with the second remote apparatus within the time period. The functions may be implemented by any one of several algorithms resulting from the processor 614 executing the detection software module 802. One such exemplary algorithm is shown in FIG. 10A.

Referring to FIG. 10A, the means 904 for monitoring a wireless medium for a request from a second remote apparatus includes block 1002, block 1004, and block 1006. In block 1002, the detection software module 802 places the wireless transceiver 602 (see FIG. 6) into a receive only mode. In block 1004, the detection software module 802 monitors the output from the wireless transceiver 602 for a relay request for a certain time period. Once the time period expires, the detection software module 802 enters a time out mode in block 1006. The purpose of the time out mode is to conserve power when there arc no apparatuses in the coverage region seeking an interface. Returning to block 1004, if the detection software module 802 detects a relay request during the time period, it proceeds to block 1008.

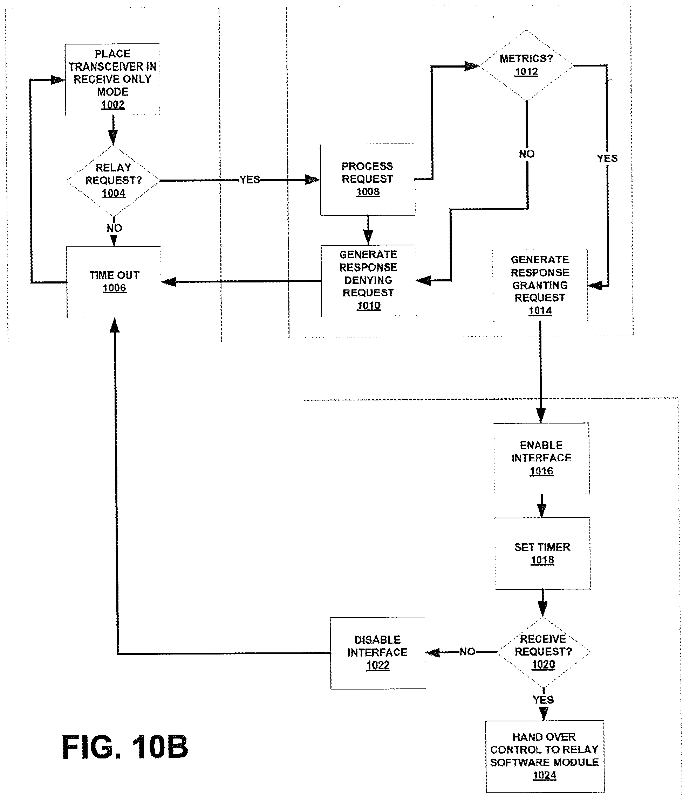

The means 906 for determining whether to enable an interface between the first and second remote apparatuses in response to the request includes block 1008, block 1010, block 1012, and block 1014. In block 1008, the detection software module 802 processes the request. This includes, by way of example, determining whether the request contains any limitations, such as a request for an interface to a specific apparatus. If the limitations in the request cannot be satisfied, the detection software module 802 generates a response denying the request in block 1010. The detection software module 802 then returns to the time out mode in block 1006. If, on the other hand, the limitations in the request can be satisfied, then the detection software module 802 evaluates various metrics in block 1012. As discussed above, these metrics may include, by way of example, the battery level, the current resource usage, the signal strength of the relay request, the signal strength to the first remote apparatus, user settings, or any other suitable metrics, or any combination thereof. Depending on these metrics, the detection software module 802 may generate a response granting or denying the request. If the metrics require the detection software module 802 to deny the request, it will generate the appropriate response in block 1010 and return to the time out mode in block 1006. If, on the other hand, the metrics allow the detection software module 802 to grant the request, it will generate the appropriate response in block 1014 and proceed to block 1015 or block 1016 (*see* FIG. 10B).

The means 907 for enabling the interface to communicate data packets between the first and second remote apparatuses includes block 1015 and block 1017. In block 1015, the detection software module 802 enables the relay software module 804 by loading the relay software module 804 into the processor 614 for execution. The detection software module 802, upon detecting an association request, hands over control of the interface to the relay software module 804 in block 1017.

In an alternative aspect, as shown in FIG. 10B, the means 908 for enabling the interface for a time period in response to the request and the means 910 for disabling the interface at the end of the time period if no association occurs with the second remote apparatus within the time period includes block 1016, block 1018, block 1020, block 1022, and block 1024. In block 1016, the detection software module 802 enables the relay software module 804 by loading the relay software module 804 into the processor 614 for execution. In block 1018, the detection software module 802 sets a timer. In block 1020, the detection software module 802 monitors the output from the wireless transceiver 602 for an association request, which is placed in a receive only mode by the relay software module 804. If the detection software module 802 does not detect an association request before the timer expires, then in block 1022 it disables the relay software module 804 by removing the relay software module 804 from the processor 614 and returns to the time out mode in block 1006. If, on the other hand, the detection software module 802 detects an association request before the timer expires, it hands over control of the interface to the relay software module 804 in block 1024.

The relay software module 804 may be executed by the processor 614 to provide an interface between the first and second remote apparatuses. The interface may provide the functionality typically performed by an AP. By way of example, the interface may control the wireless transceiver 602 to implement the protocol handshake required to complete the association process. The interface may provide other functionality such as authenticating apparatuses, communicating data packets between the first and second remote apparatuses, and implementing protocols to reduce data packet collisions, such as RTS/CTS protocols to support CS/CSMA in IEEE 802.11 compliant systems.

It is understood that any specific order or hierarchy of steps described in the context of a software module is being presented to provide an examples of an apparatus. Based upon design preferences, it is understood that the specific order or hierarchy of steps may be rearranged while remaining within the scope of the disclosure.

Whether the apparatus is implemented in hardware, software, or a combination thereof will depend upon the particular application and design constraints imposed on the overall system. Skilled artisans may implement the described functionality in varying ways for each particular application, but such implementation decisions should not be interpreted as causing a departure from the scope of the disclosure.

The previous description is provided to enable any person skilled in the art to fully understand the full scope of the disclosure. Modifications to the various configurations disclosed herein will be readily apparent to those skilled in the art. Thus, the claims are not intended to be limited to the various aspects of the disclosure described herein, but are to be accorded the full scope consistent with the language of claims. All structural and functional equivalents to the elements of the various aspects described throughout this disclosure that arc known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

### FURTHER SUMMARY OF THE INVENTION

1. An apparatus for wireless communications, comprising:
   a processing system configured to:
      associate with a first remote apparatus;
      monitor a wireless medium for a request from a second remote apparatus; and
      determine whether to enable an interface between the first and second remote apparatuses in response to the request.
2. The apparatus of 1 wherein the request comprises a probe request.
3. The apparatus of 1 wherein the request comprises a request for the interface between the first and second remote apparatuses.
4. The apparatus of 1 wherein the request specifies one or more apparatuses, and wherein the processing system is further configured to determine whether to enable the interface based on whether the specified one or more apparatuses comprises the first remote apparatus or another remote apparatus associated with the first remote apparatus.
5. The apparatus of 1 wherein the processing system is further configured to determine whether to enable the interface based on whether the request allows for use of the interface between the first and second remote apparatuses.
6. The apparatus of 1 wherein the processing system is further configured to determine whether to enable the interface based on current resource usage.
7. The apparatus of 1 wherein the processing system is further configured to determine whether to enable the interface based on battery level.
8. The apparatus of 1 wherein the processing system is further configured to determine whether to enable the interface based on one or more user settings.
9. The apparatus of 1 wherein the processing system is further configured to determine whether to enable the interface based on signal strength of the request,
10. The apparatus of 1 wherein the processing system is further configured to determine whether to enable the interface based on signal strength between the apparatus and the first remote apparatus.
11. The apparatus of 1 wherein the processing system is further configured to enable the interface for a time period in response to the request and disable the interface at the end of the time period if no association occurs with the second remote apparatus within the time period.
12. The apparatus of 1 wherein the processing system is further configured to periodically monitor the wireless medium for the request.
13. The apparatus of 12 wherein the periodicity is based on a time source common to the first and second remote apparatuses.
14. The apparatus of 1 wherein the processing system is further configured to enable the interface to communicate data packets between the first and second remote apparatuses.
15. A method of wireless communications, comprising:
   associating with a first remote apparatus;
   monitoring a wireless medium for a request from a second remote apparatus; and
   determining whether to enable an interface between the first and second remote apparatuses in response to the request.
16. The method of 15 wherein the request comprises a probe request.
17. The method of 15 wherein the request comprises a request for the interface between the first and second remote apparatuses.
18. The method of 15 wherein the request specifies one or more apparatuses, and wherein the determining whether to enable the interface is based on whether the specified one or more apparatuses comprises the first remote apparatus or another remote apparatus associated with the first remote apparatus.
19. The method of 15 wherein the determining whether to enable the interface is based on at least one of:
   whether the request allows for use of the interface between the first and second remote apparatuses;
   current resource usage;
   battery level;
   one or more user settings;
   signal strength of the request; or
   signal strength between the apparatus and the first remote apparatus.
20. The method of 15 further comprising enabling the interface for a time period in response to the request and disabling the interface at the end of the time period if no association occurs with the second remote apparatus within the time period.
21. The method of 15 wherein the monitoring a wireless medium comprises periodically monitoring the wireless medium for the request, wherein the periodicity is based on a time source common to the first and second remote apparatuses.
22. The method of 15 further comprising enabling the interface to communicate data packets between the first and second remote apparatuses.
23. An apparatus for wireless communications, comprising:
   a processing system configured to:
      generate a request for transmission in a wireless medium, the request comprising a request for a first remote apparatus to provide an interface to a second remote apparatus; and
      access the second remote apparatus through the interface.
24. The apparatus of 23 wherein the request specifies the second remote apparatus or another remote apparatus associated with the second remote apparatus.
25. The apparatus of 23 wherein the request specifics the second remote apparatus based on a current or previous association with the second remote apparatus.
26. The apparatus of 23 wherein the request specifies a wireless network operator to enable the first remote apparatus to limit the interface for communication with one or more devices subscribed to the wireless network operator.
27. A method for wireless communications, comprising:
   generating a request for transmission in a wireless medium, the request comprising a request for a first remote apparatus to provide an interface to a second remote apparatus; and
   accessing the second remote apparatus through the interface.
28. The method of 27 wherein the request specifies the second remote apparatus or another remote apparatus associated with the second remote apparatus.
29. The method of 27 wherein the request specifies the second remote apparatus based on a current or previous association with the second remote apparatus.
30. The method of 27 wherein the request specifies a wireless network operator to enable the first remote apparatus to limit the interface for communication with one or more devices subscribed to the wireless network operator.

## Claims

1. A second apparatus for wireless communications, comprising:
a processing system configured to:
generate a request for transmission in a wireless medium, the request comprising a request for a first apparatus, remote from the second apparatus, to provide an interface to an access point, remote from the second apparatus, or another remote apparatus associated with the access point; and
outputting the request for transmission over the wireless medium; and
access the access point through the interface if the request has been granted by the first apparatus;
wherein the first apparatus is relay capable; and
wherein the request specifies a wireless network operator to enable the first apparatus to limit the interface for communication with one or more access points belonging to the wireless network operator.

2. The second apparatus of claim 1 wherein the request specifies the access point or the other remote apparatus associated with the access point.

3. The second apparatus of claim 1 wherein the request specifies the access point based on a current or previous association with the access point.

4. The apparatus of claim 1 further comprising at least one antenna via which the request is transmitted, wherein the second apparatus is configured as a station.

5. A method for wireless communications, comprising:
generating, at a second apparatus, a request for transmission in a wireless medium, the request comprising a request for a first apparatus, remote from the second apparatus, to provide an interface to an access point, remote from the second apparatus, or another remote apparatus associated with the access point; and
outputting the request over the wireless medium; and
accessing, from the second apparatus, the access point through the interface if the request has been granted by the first apparatus;
wherein the first apparatus is relay capable; and
wherein the request specifies a wireless network operator to enable the first apparatus to limit the interface for communication with one or more access points belonging to the wireless network operator.

6. The method of claim 5 wherein the request specifies the access point or the other remote apparatus associated with the access point.

7. The method of claim 5 wherein the request specifies the access point based on a current or previous association with the access point.

8. A computer-readable medium having computer-executable instructions stored thereon to carry out the steps of any of claims 5 to 7.
